# EUROPEAN PATENT SPECIFICATION

(11) **EP 4 277 842 B1**
(45) Date of publication and mention of the grant of the patent: **25.02.2026**
(21) Application number: 22706345.0
(22) Date of filing: 11.01.2022
(51) Int. Cl.: B63H 9/069

(54) **SERIES ADDITION AEROFOIL LAUNCHING SYSTEM**
STARTSYSTEM FÜR SERIELL ZUGESTELLTE TRAGFLÄCHEN
SYSTÈME DE MISE À L'EAU DE SURFACE PORTANTE D'ADDITION EN SÉRIE

(30) Priority: 18.01.2021 GB 202100618
(43) Date of publication of application: 22.11.2023
(73) Proprietor: BLUEWATER ENGINEERING LIMITED, Stockton-on-Tees TS18 4AB (GB)
(72) Inventor: McGARLEY, James Ian, Bassenthwaite Keswick Cumbria CA12 4QH (GB)
(74) Representative: Mewburn Ellis LLP
(86) International application number: PCT/GB2022/000001
(87) International publication number: WO 2022/153031

(56) References cited:
- GB-A- 2 098 951
- US-A- 5 056 447

## Description

### Field of the Invention

The use of wind power in propulsion of watercraft has been subject to some innovation over recent years. In particular, tethered aerofoils, sometimes known generically as kites, have taken the place of conventional sails in a number of designs; this specification relates to technology intended to controllably deploy such tethered aerofoils in an array, as and when required.

### Background to the Invention

The use of tethered aerofoils for propulsion has been proven in various forms, from the sport of kitesurfing to systems for assistive propulsion of merchant ships or private yachts. However, the power capacity of tethered aerofoil systems has been limited by the amount of foil area that can practically be deployed, particularly in the latter cases. In kitesurfing the power available is often more than adequate; however, for propulsion of larger craft which suffer higher drag forces, much more power is required. The physical size of very large aerofoils makes for difficult handling, but the use of multiple aerofoils in parallel presents a severe risk of entanglement that could give rise to an emergency situation.

One solution is to deploy aerofoils together in a connected array such that they are arranged in series with one another rather than in parallel, so that they and their tethers are less likely to become entangled with each other, because they are less able to move independently of each other. The difficulty with this solution is that launching and recovering a pre-connected or pre-arranged array requires handling multiple aerofoils at once, and requires either that they all be launched as a complete array or that some intermediate part of the array be secured to the base if no more than a subset of the aerofoils are required to be launched. Launch and recovery in this case may be challenging. This system is also limited in that the configuration of the array is inflexible; the aerofoils are pre-installed in a particular order that cannot be changed, nor can their distribution and spacing.

Various forms of series or branched aerofoil arrays have been proposed in the prior art but none address the problem of reconfiguration of the array while it is airborne. Furling and unfurling systems have been described, in proposed branched arrays, that would allow effective changes in the nature of the array by opening and closing specific aerofoils at will, but this does not amount to truly flexible reconfiguration and branched arrays are still susceptible to entanglement. Where series arrays are described there is no described means of varying the configuration of the array without making fundamental changes to it while it is out of service. Nor is there any described means of varying the position or spacing of foils relative to each other. Moreover, and very importantly, there is no described means of retracting an aerofoil from the series without retracting the entire array. That is unsatisfactory because it would require a significant supply of power to do so in the case of an array with large aggregate aerofoil area, even with the foils adjusted to a minimum practicable coefficient of lift.

US 5056447 A discloses a rein-deer kite. GB 2098951 A discloses launching a tethered sail for marine and other uses.

### Summary of the Invention

This invention proposes to improve upon the use of aerofoils for propulsion by providing a means to deploy and retract aerofoils independently as part of a series array, adding and subtracting them from the primary structure of the array.

The basic principle of the system is that an 'auxiliary aerofoil' or kite, or group thereof, would first be launched, in order to establish this primary structure by pulling one or more 'primary tethers' into the air and tensioning them against the reaction of the base to which they are directly or indirectly connected, such that subsequent 'duty aerofoils,' which may be larger and more powerful, can be controllably launched using these primary tethers for guidance, traction, security, reaction or restraint or for any or all of these purposes. This is achieved using runners that can be run out along those primary tethers to a required position and that may be used to connect the duty aerofoils to the primary tethers.

In this specification the following definitions shall be taken to apply:
'tethered aerofoil' shall be taken to mean an aerofoil whose physical restraint relies upon tethers, of which there may be one or more;
'tether' shall be taken to mean any flexible tension-bearing element;
'series array' shall be taken to mean an arrangement where some aerofoils are secured at intervals, regular or otherwise, along a common element, such as a tether or a set of tethers; 'primary tether' shall be taken to mean a tether that is connected to at least one auxiliary aerofoil and is directly or indirectly connected to a base such that it may exert pulling forces upon that base;
   - 'auxiliary aerofoil' shall be taken to mean an aerofoil that is used to pull a primary tether or set of primary tethers into the air and tension it against the reaction of the base to which it is directly or indirectly connected;
   - 'duty aerofoil' shall be taken to mean an aerofoil that may be connected directly or indirectly to the primary tethers such that it may transmit force to them, that is not an auxiliary aerofoil;
   - 'runner' shall be taken to mean a device that can travel along a primary tether and to which a duty aerofoil may be directly or indirectly connected.

Runners would preferably be connected to the primary tethers as part of the launch process and may be able to be disconnected when not in use, but alternatively they may reside on the primary tethers such that duty aerofoils may be connected to them prior to launch. The duty aerofoils may be connected to the runners directly or indirectly. When the runners are connected to the primary tethers, they are limited in radial motion relative to those tethers.

The runners may be used to deploy duty aerofoils by a number of methods: by towing the aerofoils as the runners progress outward along the primary tethers; by hauling the aerofoils towards them from an elevated position; by restraining the aerofoils from below as they self-deploy using lift generated from the incident airflow or are hauled away by separate launching kites, or by any other method that uses the runners and uses the primary tethers for guidance, traction, security, reaction or restraint or for any or all of these purposes. A duty aerofoil may be connected to one or more runners on any given primary tether. Two is a preferable solution, one to launch and one to restrain, but more may be necessary, for example if the aggregated power of several were needed.

The system comprises means to cause the runners to move outbound along the primary tethers, means to stop them at a required position and means to cause them to move inbound. These functions may be achieved by various methods, for example: direct engagement between the runners and primary tethers such that they may use them for powered traction, actuated braking or such like; external means such as separate secondary tethers, or independent means such as wind powered runner propulsion systems or thrust sources. The runners may have a localised energy source to enable control, communications and possibly propulsion, or may be supplied with power from the operating base or from elsewhere.

Once a duty aerofoil is deployed onto the array, it may be secured and restrained in its array position by the runners directly, or by separate attachment devices which are actuated to secure the duty aerofoil to the primary tethers. This latter option may allow the runners to be released in order to travel elsewhere along the primary tethers. Whichever method is used, the restraint positions may be set at predetermined points, perhaps by provision of pre-installed fixture points on the primary tethers, or may be continuously variable along the available length of the primary tethers, for example by clamping onto the tethers directly. Continuously variable positioning is preferable because it adds even more versatility to the array and allows the primary tethers to be free of installed parts, making those tethers stronger and their handling easier.

Such a system allows freedom of choice of the size and type of aerofoils to add to the array at a given moment, freedom to choose the order in which to add aerofoils to the array and freedom to choose their position on the array structure, i.e. the interval between one and the next. This level of flexibility allows the operator to purposefully configure the array, perhaps to suit current conditions or imminent operational intentions, without taking the array out of service. The system also allows a duty aerofoil to be retracted without necessitating the retraction of the whole array simultaneously, which is extremely important in minimising the operating power demands of a large, powerful array.

It is observed that although this specification describes a system for aerofoils and kites, it may equally apply to the use of hydrofoils in water and may be alternatively interpreted as such, where the working medium is water in place of air and the foils may be deployed below, on or above the horizontal.

Communications within the system described herein would preferably use radio frequency methods, for example digital UHF communications, but may use wiring, optical, sonic or other methods.

The invention will now be described solely by way of example and with reference to the accompanying drawings, which can be captioned as follows:

### Brief Description of the Drawings

Fig. 1 shows an outline of the key components of the system.
Figs. 2a and 2b show a preferred embodiment of the system in which the runners are self-propelled.
Fig. 3 shows a preferred development of the system in which the runners act as carriers of independent attachment devices that secure the duty aerofoils to the primary tethers.
Figs. 4a and 4b show a non-preferred embodiment in which the runners are free to run along the primary tethers but for being restrained and/or controlled by secondary tethers.
Fig. 5 shows a non-preferred embodiment in which the runners are propelled by dedicated 'service kites' which are controlled to make use of the incident airflow to pull the runners along.
Figs. 6a, 6b and 6c show various means of deploying the duty aerofoils using the runners, including towing, hauling and surging.

### Detailed Description

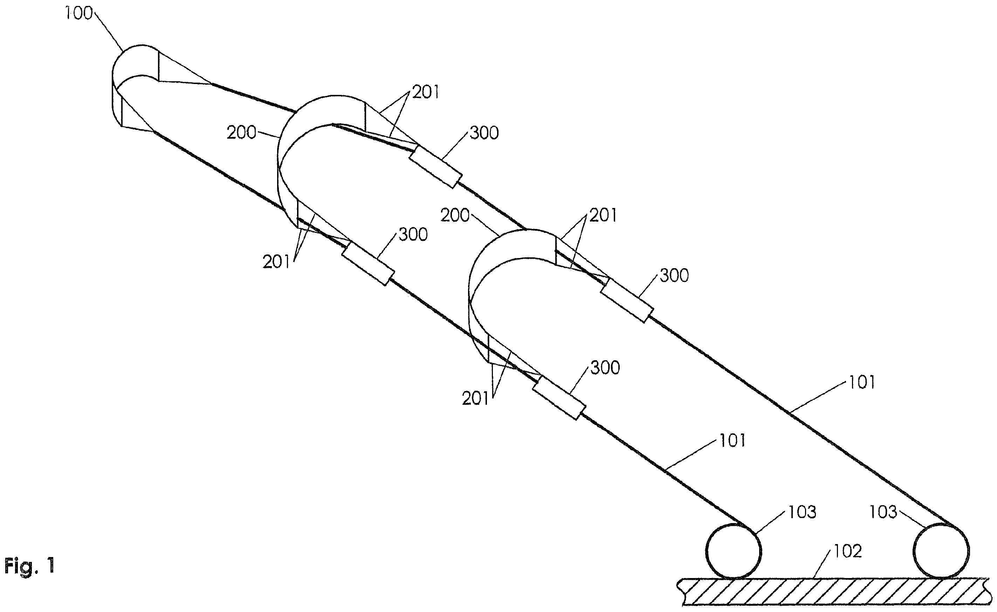

In Fig. 1, an outline sketch of the system is shown. An auxiliary aerofoil 100 holds the primary tethers 101 in the air, tensioning them against the reaction of the base 102. Two primary tethers are shown, which is the preferred solution, but there may be any number. There may also be multiple auxiliary aerofoils, although only one is shown. The primary tethers 101 may be restrained at the base 102 using winches 103 and/or some other means of restraint. Duty aerofoils 200 are restrained to the primary tethers 101 using duty tethers 201 and runners 300, through which they transmit their pull force to the primary tethers and thence to the base, directly or indirectly. Four duty tethers are shown here for each aerofoil, for simplicity, although there may be any number and they may be arranged in a sub-dividing bridle system similar to those used for paragliders or kitesurfing kites.

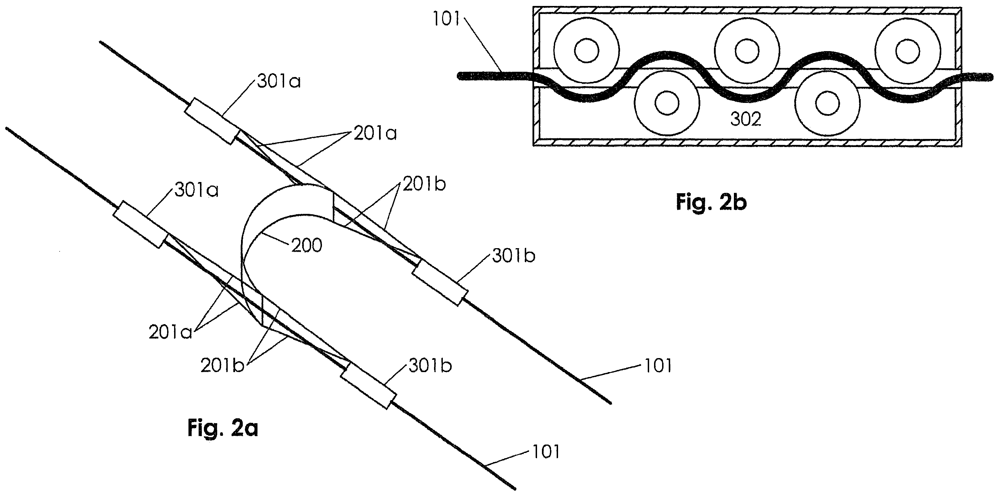

Preferably, this system would use self-propelled runners, which would engage the primary tethers and drive along them to the desired positions. As illustrated in Fig. 2a, a duty aerofoil 200 would be connected to these self-propelled runners 301 by duty tethers 201 which would enable the runners to pull the aerofoil into flight, and would restrain it relative to the primary tethers 101 so that once it fills in the airflow, the lift generated by the aerofoil would be transmitted to the primary tethers. The system may use separate upper and lower runners, whereby the upper runners 301a pull the aerofoil into flight using duty tethers 201a, and the lower runners 301b restrain it relative to the primary tethers using duty tethers 201b. The self-propelled runners may use various drive systems that use the primary tethers 101 for traction, for example a serpentine winch 302 as shown in Fig. 2b, which is preferred; a spiral winch; tether-gripping opposed drive wheels or a reciprocating, 'walking' clamp drive mechanism. Alternatively they may use aerodynamic forces or thrust for propulsion, for example using a rocket, jet, fan or propeller. In a variant of the self-propelled embodiment, a runner may be pushed, pulled or manoeuvred by another runner.

In some cases an upper runner may not be required on every primary tether, for example if there were four primary tethers, upper runners may be used only on two of them. There may also be more than one upper runner and/or lower runner on a primary tether, for example if the aggregate power of several were needed.

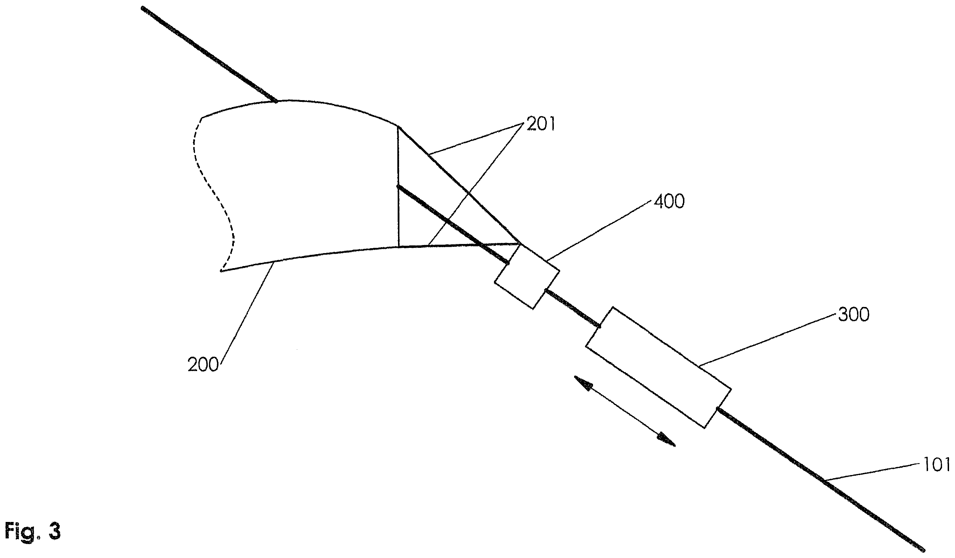

Fig. 3 shows a preferred development of the system whereby a runner 300 transfers an attachment device 400 to a desired position on a primary tether, at which point the device secures itself to the primary tether 101 and the runner releases it. The duty aerofoil 200 would be connected to the attachment device 400 using duty tethers 201, of which there may be several, and thus would be secured by it to the primary tether 101 until the runner 300 returns to retrieve it later. The runner in this case would preferably be self-propelled as described above but may nonetheless be propelled in alternative ways.

An attachment device 400 may be powered from the operating base station or from elsewhere, for example by an electrical cable, or may, preferably, have a localised power source of its own. Power may be necessary to actuate controls that alter the shape or attitude of the duty aerofoil, for example by manipulating the duty tethers 201, and may also be necessary to communicate and receive commands and to carry out other necessary functions, for example data gathering, computation, and lighting. Localised energy reserves may be sufficient for the duration of the operation or may be able to be replenished by a runner or similar device, which could be called a 'shuttle,' capable of progressing along the primary tether to reach the attachment device and recharging, refuelling or re-energising it. In this case runners and shuttles may also have their own power sources and energy reserves or may be powered from elsewhere.

In embodiments that do not employ attachment devices, and that rely on the runners to restrain the duty aerofoils relative to the primary tethers, the runners may perform all of the functions attributed to the attachment devices 400 as described herein, and may be supplied with power in the same ways as described for those devices, including the replenishment of their energy reserves by other runners or by shuttles.

An alternative to replenishing the energy reserves of the attachment devices while they are in service is to replace a discharged attachment device 400 with a replacement. The discharged device may then return to the operating base or to a remote energy source to be refuelled, recharged or re-energised. This principle may also be applied to some sub-assembly of the attachment device, for example a removable battery or tank or some form of modular power unit.

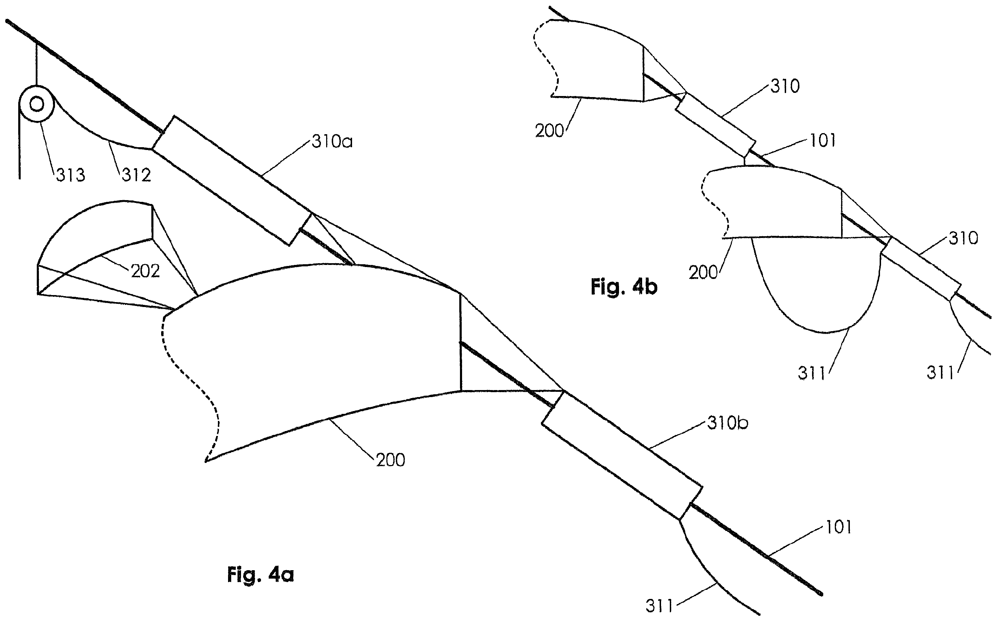

In Fig. 4a, a non-preferred embodiment can be seen where simple runners 310b are controlled by separate, secondary, tethers 311. These tethers would be used to restrain the runners 301b as the duty aerofoils 200 are launched. A duty aerofoil may launch into the airflow under its own lift power, or pulled by a launching kite 202; alternatively it may be pulled into the air by upper runners 310a which are pulled skyward by hoisting tethers 312. These may be hauled up by a mechanism above or turned through a pulley 313 above back down to the operating base from which they are hauled in. The great disadvantage of the hoisting tether system is the multiplicity of tethers that become airborne in parallel as more and more duty aerofoils are launched, much increasing the risk of entanglement, twisting and chafe. Using wind-powered launch and only the secondary, restraining, tethers 311 and single runners 310, as shown in Fig. 4b, these risks can be reduced by use of a clamping mechanism that secures the runners 310 to the primary tethers 101, allowing the secondary tethers 311 to be slackened and their lower ends attached to the following duty aerofoil's runners, forming a slack loop between the aerofoils as they launch, rather than having many secondary tethers all leading in parallel back to the operating base. This does not negate the risk completely, however; a slack loop can also cause problems if left hanging in a breeze.

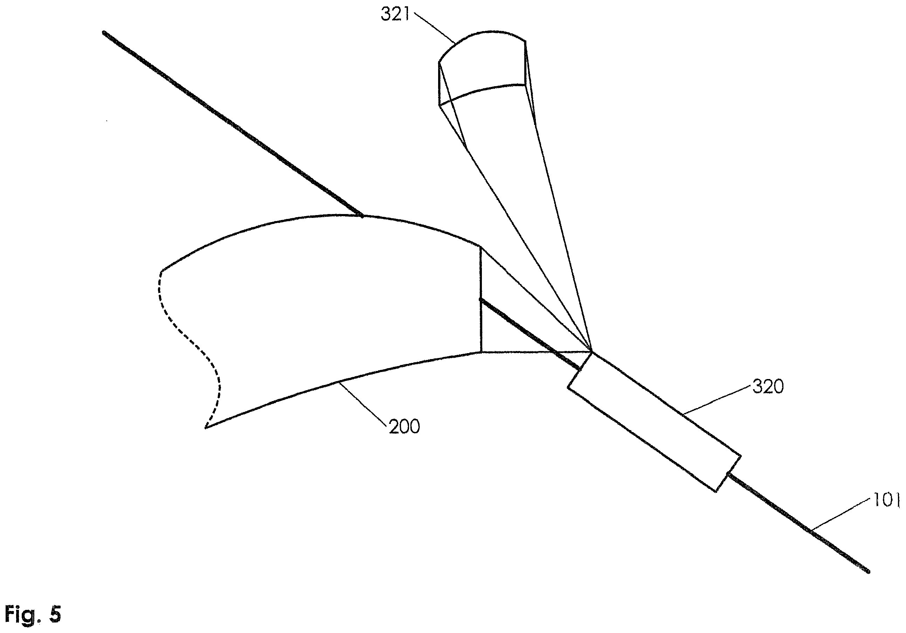

Fig. 5 shows wind-propelled runners 320 which are manoeuvred by controlling the airflow over the 'service kites' 321 which propel them. It is not a preferred embodiment of the system, again because of the entanglement risk, but it is a novel, possibly useful means of runner propulsion because very little power input is required to operate it - the majority of the tractive force comes from the wind flowing over the service kites. Some form of clamp mechanism or brake would be needed here, to secure the runners 320 in the desired position along the primary tethers 101.

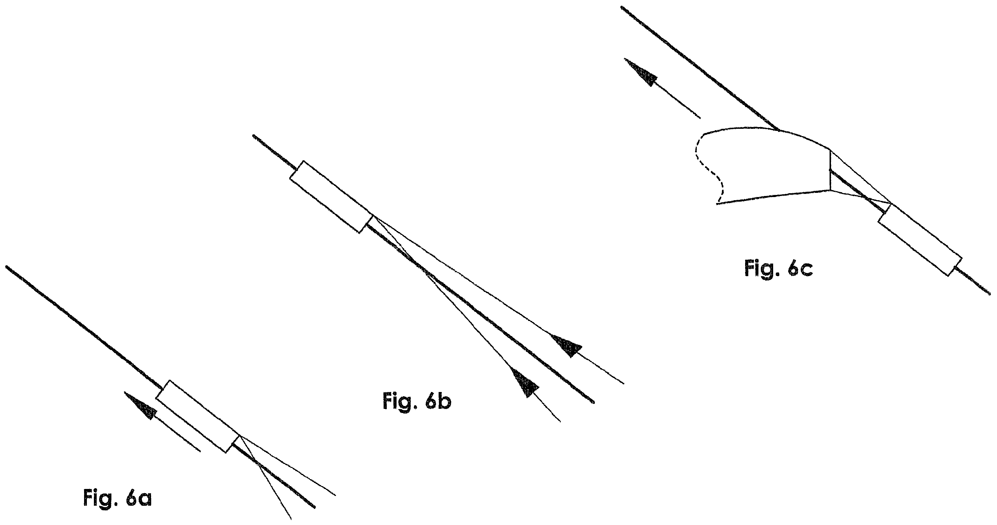

Figs. 6a, 6b and 6c show several different means of using the runners to launch, position and restrain aerofoils. These include towing as shown in Fig. 6a, hauling from an elevated position as shown in Fig. 6b and restraining from below as shown in Fig. 6c, as the aerofoil launches, surging along the primary tethers, preferably at a controlled rate, and eventually coming to a halt at the required position. A variant of this could be that the runner would come to a halt at a desired position on its primary tether by means of a mechanism which engages with a fitting or mechanism at a predefined point upon the primary tether, or which clamps onto the primary tether after a measured time or distance, or upon remote command.

## Claims

1. A system for deploying multiple tethered aerofoils (100, 200) to form a series array, insofar as:
1.1. 'tethered aerofoil' is taken to mean an aerofoil (100, 200) whose physical restraint relies upon tethers (101), of which there may be one or more;
1.2. 'tether' (101, 201) is taken to mean any flexible tension-bearing element;
1.3. 'series array' is taken to mean an arrangement where some aerofoils (100, 200) are secured at intervals, regular or otherwise, along a common element, such as a tether or a set of tethers (101),
and that comprises:
1.4. a primary tether or set of primary tethers (101), where 'primary tether' is taken to mean a tether (101) that is connected to at least one auxiliary aerofoil (100) and is directly or indirectly connected to a base (102) such that it may exert pulling forces upon that base (102);
1.5. at least one auxiliary aerofoil (100), where 'auxiliary aerofoil' is taken to mean an aerofoil that is used to pull a primary tether (101) or set of primary tethers into the air and tension it against the reaction of the base (102) to which it is directly or indirectly connected;
1.6. one or more other, 'duty' aerofoils (200), where 'duty aerofoil' is taken to mean an aerofoil that may be connected to the primary tethers (101) such that it may transmit force to them, that is not an auxiliary aerofoil (100),
wherein:
1.7. it comprises runners (300), where 'runner' is taken to mean a device that can travel along a primary tether (101) and to which a duty aerofoil (200) may be directly or indirectly connected;
1.8. it comprises means of connection (201) between the one or more duty aerofoils (200) and the runners (300);
1.9. the one or more duty aerofoils (200) are added to the array by connecting them, using the runners (300), to the primary tether or tethers (101), such that the aerofoils (100, 200) can be raised into the air using the primary tether or tethers (101) for guidance, traction, security, reaction or restraint or for any or all of these purposes;
1.10. the runners' (300) connections to the primary tethers (101) are such that their radial motion relative to the primary tethers (101) is limited;
1.11. the system comprises means to cause the runners (300) to travel outbound along the primary tethers (101);
1.12. the system comprises means to stop the runners (300) at required positions;
1.13. the system comprises means to cause the runners (300) to travel inbound
1.14. the system comprises means to transmit pulling forces from the one or more duty aerofoils (200) to the primary tethers (101), and
1.15. the duty aerofoils' (200) connections to the array are temporary, such that they can be disconnected from the array.

2. A system as described in claim 1, **characterised in that** duty aerofoils (200) can be added to the array in any desired order, to allow choice of, for example, size or type of aerofoil.

3. A system as described in any of the preceding claims, **characterised in that** the duty aerofoils (200) can be secured to the primary tethers (101) at predefined positions.

4. A system as described in any of the preceding claims, **characterised in that** the duty aerofoils (200) can be secured to the primary tethers (101) at any position along their length.

5. A system as described in any of the preceding claims, **characterised in that** the runners (300) can be connected to, and disconnected from, the primary tethers (101).

6. A system as described in any of the preceding claims, **characterised in that** it includes a mechanism which slows, stops, actuates or otherwise controls the motion of the runners (300) along the tethers (101).

7. A system as described in any of the preceding claims, **characterised in that** runners (300) tow the duty aerofoils (200) into the air.

8. A system as described in any of the preceding claims, **characterised in that** runners (300) travel outbound along the primary tethers (101) to a position from which they haul duty aerofoils (200) into the air.

9. A system as described in any of the preceding claims, **characterised in that** runners (300) restrain a duty aerofoil (200) as it launches into the air under its own power or pulled by a launching kite, surging, maybe at a controlled rate, along the primary tethers (101) and coming to a halt at the required position.

10. A system as described in any of the preceding claims, **characterised in that** some or all runners (300) are self-propelled (301).

11. A system as described in any of the preceding claims, **characterised in that** some or all runners (300) are propelled by means of a drive mechanism that uses the primary tether (101) for traction.

12. A system as described in any of the preceding claims, **characterised in that** some or all duty aerofoils (200) are launched, positioned or recovered using two or more runners on at least one of the primary tethers (101), for example an upper runner (301a) and a lower runner (301b).

13. A system as described in any of the preceding claims, **characterised in that** the duty aerofoils (200) are secured to the primary tethers by attachment devices (400) which are separate from the runners (300).

14. A system as described in any of the preceding claims, **characterised in that** attachment devices (400) and/or runners (300) have a localised source of energy with which to carry out necessary functions, for example propulsion, aerofoil control, internal control, communications, data gathering, computation and lighting, amongst other things.

15. A system as described in the preceding claim, **characterised in that** localised sources of energy may be replenished, refuelled, recharged, re-energised or replaced, as appropriate, using other devices such as runners or shuttles that can travel along primary tethers (101), and which may have their own localised sources of energy.

## Patentansprüche

1. System zum Einsetzen mehrerer angebundener Tragflächen (100, 200) zum Ausbilden einer Serienanordnung, wobei:
1.1 "angebundene Tragfläche" sich auf eine Tragfläche (100, 200) bezieht, deren physisches Zurückhalten auf Spannseilen (101) beruht, von denen eines oder mehrere vorliegen kann/können;
1.2 "Spannseil" (101, 201) sich auf ein beliebiges biegsames, unter Zugspannung stehendes Element bezieht;
1.3 "Serienanordnung" sich auf eine Anordnung bezieht, bei der einige Tragflächen (100, 200) in regelmäßigen oder sonstigen Intervallen entlang eines gemeinsamen Elements, wie etwa einem Spannseil oder einem Satz von Spannseilen (101), festgelegt sind,
und Folgendes umfassend:
1.4 ein primäres Spannseil oder einen Satz von primären Spannseilen (101), wobei "primäres Spannseil" sich auf ein Spannseil (101) bezieht, das mit zumindest einer Hilfstragfläche (100) verbunden und direkt oder indirekt mit einer Basis (102) verbunden ist, sodass es Zugkräfte auf diese Basis (102) ausüben kann;
1.5 zumindest eine Hilfstragfläche (100), wobei sich "Hilfstragfläche" auf eine Tragfläche bezieht, die verwendet wird, um ein primäres Spannseil (101) oder einen Satz von primären Spannseilen in die Luft zu ziehen und es gegen die Reaktion der Basis (102), mit der es direkt oder indirekt verbunden ist, zu spannen;
1.6 eine oder mehrere "Arbeitstragflächen" (200), wobei sich "Arbeitstragfläche" auf eine Tragfläche bezieht, die mit den primären Spannseilen (101) derart verbunden ist, dass sie Kraft auf diese übertragen kann, und welche keine Hilfstragfläche (100) ist;
1.7 wobei es Gleitelemente (300) umfasst, wobei "Gleitelemente" sich auf eine Vorrichtung bezieht, die sich entlang eines primären Spannseils (101) bewegen kann und mit der eine Arbeitstragfläche (200) direkt oder indirekt verbunden sein kann;
1.8 wobei es ein Verbindungsmittel (201) zwischen der einen oder den mehreren Arbeitstragflächen (200) und den Gleitelementen (300) umfasst;
1.9 wobei die eine oder die mehreren Arbeitstragflächen (200) zu der Anordnung hinzugefügt werden, indem sie unter Verwendung der Gleitelemente (300) derart mit dem/den primären Spannseil(en) (101) verbunden werden, dass die Tragflächen (100, 200) unter Verwendung des/der primären Spannseils/Spannseile (101) zum Führen, Ziehen, zur Sicherheit, Reaktion oder zum Zurückhalten oder für einen oder alle dieser Zwecke in die Luft gehoben werden können;
1.10 wobei die Verbindungen der Gleitelemente (300) mit den primären Spannseilen (101) derart sind, dass ihre Radialbewegung relativ zu den primären Spannseilen (101) eingeschränkt ist;
1.11 wobei das System Mittel zum Bewirken einer Auswärtsbewegung der Gleitelemente (300) entlang der primären Spannseile (101) umfasst;
1.12 wobei das System Mittel zum Anhalten der Gleitelemente (300) in erforderlichen Positionen umfasst;
1.13 wobei das System Mittel zum Bewirken einer Einwärtsbewegung der Gleitelemente (300) umfasst;
1.14 wobei das System Mittel zum Übertragen von Zugkräften von der einen oder den mehreren Arbeitstragflächen (200) auf die primären Spannseile (101) umfasst, und
1.15 wobei die Verbindungen der Arbeitstragflächen (200) mit der Anordnung vorübergehend sind, sodass sie von der Anordnung gelöst werden können.

2. System nach Anspruch 1, **dadurch gekennzeichnet, dass** Arbeitstragflächen (200) zu der Anordnung in beliebiger Reihenfolge hinzugefügt werden können, um beispielsweise die Größe oder den Typ der Tragfläche wählen zu können.

3. System nach einem der vorangegangenen Ansprüche, **dadurch gekennzeichnet, dass** die Arbeitstragflächen (200) in vordefinierten Positionen sicher an den primären Spannseilen (101) befestigt sein können.

4. System nach einem der vorangegangenen Ansprüche, **dadurch gekennzeichnet, dass** die Arbeitstragflächen (200) in einer beliebigen Position entlang ihrer Länge an den primären Spannseilen (101) befestigt sein können.

5. System nach einem der vorangegangenen Ansprüche, **dadurch gekennzeichnet, dass** die Gleitelemente (300) mit den primären Spannseilen (101) verbunden sein und von diesen gelöst werden können.

6. System nach einem der vorangegangenen Ansprüche, **dadurch gekennzeichnet, dass** es einen Mechanismus umfasst, der die Bewegung der Gleitelemente (300) entlang der Spannseile (101) verlangsamt, anhält, betätigt oder auf sonstige Weise steuert.

7. System nach einem der vorangegangenen Ansprüche, **dadurch gekennzeichnet, dass** Gleitelemente (300) die Arbeitstragflächen (200) in die Luft ziehen.

8. System nach einem der vorangegangenen Ansprüche, **dadurch gekennzeichnet, dass** Gleitelemente (300) sich entlang der primären Spannseile (101) bis in eine Position nach außen bewegen, von der aus sie Arbeitstragflächen (200) in die Luft ziehen.

9. System nach einem der vorangegangenen Ansprüche, **dadurch gekennzeichnet, dass** Gleitelemente (300) eine Arbeitstragfläche (200) zurückhalten, wenn diese aus eigener Kraft oder durch einen Startdrachen in die Luft abhebt, wobei sie mitunter bei gesteuerter Geschwindigkeit entlang der primären Spannseile (101) ansteigen und in der erforderlichen Position zum Stillstand kommen.

10. System nach einem der vorangegangenen Ansprüche, **dadurch gekennzeichnet, dass** ein Teil oder die Gesamtheit der Gleitelemente (300) selbst-angetrieben (301) ist.

11. System nach einem der vorangegangenen Ansprüche, **dadurch gekennzeichnet, dass** ein Teil oder die Gesamtheit der Gleitelemente (300) mittels eines Antriebsmechanismus, der zum Ziehen das primäre Spannseil (101) verwendet, angetrieben wird.

12. System nach einem der vorangegangenen Ansprüche, **dadurch gekennzeichnet, dass** ein Teil oder die Gesamtheit der Tragflächen (200) unter Verwendung von zwei oder mehreren Gleitelementen auf zumindest einer der primären Spannseile (101), etwa einem oberen Gleitelement (301a) und einem unteren Gleitelement (301b), gestartet, positioniert oder eingeholt wird.

13. System nach einem der vorangegangenen Ansprüche, **dadurch gekennzeichnet, dass** die Arbeitstragflächen (200) durch Befestigungsvorrichtungen (400), die von den Gleitelementen (300) getrennt sind, an den primären Spannseilen festgelegt sind.

14. System nach einem der vorangegangenen Ansprüche, **dadurch gekennzeichnet, dass** Befestigungsvorrichtungen (400) und/oder Gleitelemente (300) eine lokalisierte Energiequelle aufweisen, mit der sie notwendige Funktionen, etwa unter anderem Antrieb, Tragflächensteuerung, interne Steuerung, Kommunikation, Datenerhebung, Berechnungen und Beleuchtung, ausführen.

15. System nach einem der vorangegangenen Ansprüche, **dadurch gekennzeichnet, dass** lokalisierte Energiequellen unter Verwendung von anderen Vorrichtungen, wie etwa Gleitelementen oder Verschiebeköpfen, die sich entlang von primären Spannseilen (101) bewegen und die ihre eigenen lokalisierten Energiequellen aufweisen können, nach Bedarf wiederaufgefüllt, wiederbetankt, wiederaufgeladen, wieder mit Spannung versorgt oder ausgetauscht werden können.

## Revendications

1. Système pour déployer plusieurs profils aérodynamiques attachés (100, 200) pour former un réseau en série, dans la mesure où :
1.1. « profil aérodynamique attaché » désigne un profil aérodynamique (100, 200) dont la retenue physique repose sur des attaches (101), qui peuvent être au nombre d'un ou plus ;
1.2. « attache » (101, 201) désigne tout élément porteur de tension flexible ;
1.3. « réseau en série » désigne un agencement dans lequel certains profils aérodynamiques (100, 200) sont fixés à des intervalles, réguliers ou non, le long d'un élément commun, tel qu'une attache ou un ensemble d'attaches (101),
et qui comprend :
1.4. une attache primaire ou un ensemble d'attaches primaires (101), où « attache primaire » désigne une attache (101) qui est connectée à au moins un profil aérodynamique auxiliaire (100) et est directement ou indirectement connectée à une base (102) de telle sorte qu'elle puisse exercer des forces de traction sur cette base (102) ;
1.5. au moins un profil aérodynamique auxiliaire (100), où « profil aérodynamique auxiliaire » désigne un profil aérodynamique qui est utilisé pour tirer une attache primaire (101) ou un ensemble d'attaches primaires dans l'air et la/le tendre à l'encontre de la réaction de la base (102) à laquelle elle/il est directement ou indirectement connecté(e) ;
1.6. un ou plusieurs autres profils aérodynamiques « de service » (200), où « profil aérodynamique de service » désigne un profil aérodynamique qui peut être relié aux attaches primaires (101) de telle sorte qu'il puisse leur transmettre une force, qui n'est pas un profil aérodynamique auxiliaire (100),
dans lequel :
1.7. il comprend des glissière (300), où « glissière » désigne un dispositif qui peut se déplacer le long d'une attache primaire (101) et auquel un profil aérodynamique de service (200) peut être connecté directement ou indirectement ;
1.8. il comprend des moyens de connexion (201) entre les un ou plusieurs profils aérodynamiques de service (200) et les glissières (300) ;
1.9. les un ou plusieurs profils aérodynamiques de service (200) sont ajoutées au réseau en les reliant, à l'aide des glissières (300), à la ou aux attaches primaires (101), de telle sorte que les profils aérodynamiques (100, 200) puissent être soulevés dans les airs à l'aide de la ou des attaches primaires (101) à des fins de guidage, de traction, de sécurité, de réaction ou de retenue ou à l'une ou à l'ensemble de ces fins ;
1.10. les connexions des glissières (300) aux attaches primaires (101) sont telles que leur mouvement radial par rapport aux attaches primaires (101) est limité
1.11. le système comprend des moyens pour amener les glissières (300) à se déplacer vers l'extérieur le long des attaches primaires (101) ;
1.12. le système comprend des moyens pour arrêter les glissières (300) dans des positions requises ;
1.13. le système comprend des moyens pour amener les glissières (300) à se déplacer vers l'intérieur ;
1.14. le système comprend des moyens pour transmettre les forces de traction d'un profil aérodynamique de service (200) aux attaches primaires (101), et
1.15. les connexions des profils aérodynamiques de service (200) au réseau sont temporaires, de sorte qu'ils peuvent être déconnectés du réseau.

2. Système selon la revendication 1, **caractérisé en ce que** des profils aérodynamiques de service (200) peuvent être ajoutés au réseau dans tout ordre souhaité, pour permettre le choix, par exemple, de la taille ou du type de profil aérodynamique.

3. Système selon l'une quelconque des revendications précédentes, **caractérisé en ce que** les profils aérodynamiques de service (200) peuvent être fixés aux attaches primaires (101) dans des positions prédéfinies.

4. Système selon l'une quelconque des revendications précédentes, **caractérisé en ce que** les profils aérodynamiques de service (200) peuvent être fixés aux attaches primaires (101) dans toute position sur leur longueur.

5. Système selon l'une quelconque des revendications précédentes, **caractérisé en ce que** les glissières (300) peuvent être connectées aux attaches primaires (101), et déconnectées de celles-ci.

6. Système selon l'une quelconque des revendications précédentes, **caractérisé en ce qu'**il comprend un mécanisme qui ralentit, arrête, actionne ou commande d'une autre manière le mouvement des glissières (300) le long des attaches (101).

7. Système selon l'une quelconque des revendications précédentes, **caractérisé en ce que** les glissières (300) tractent les profils aérodynamiques de service (200) dans les airs.

8. Système selon l'une quelconque des revendications précédentes, **caractérisé en ce que** les glissières (300) se déplacent vers l'extérieur le long des attaches primaires (101) jusqu'à une position à partir de laquelle elles transportent des pales de service (200) dans les airs.

9. Système selon l'une quelconque des revendications précédentes, **caractérisé en ce que** les glissières (300) retiennent un profil aérodynamique de service (200) lorsqu'elle se lance dans les airs sous leur propre puissance ou tirées par un cerf-volant de lancement, bondissant, peutêtre à une vitesse commandée, le long des attaches primaires (101) et venant s'arrêter dans la position requise.

10. Système selon l'une quelconque des revendications précédentes, **caractérisé en ce que** certaines ou toutes les glissières (300) sont auto-propulsées (301).

11. Système selon l'une quelconque des revendications précédentes, **caractérisé en ce que** certaines ou toutes les glissières (300) sont propulsées au moyen d'un mécanisme d'entraînement qui utilise l'attache primaire (101) pour une traction.

12. Système selon l'une quelconque des revendications précédentes, **caractérisé en ce que** certains ou tous les profils aérodynamiques (200) sont lancés, positionnés ou récupérés à l'aide de deux ou glissières ou plus sur au moins l'une des attaches primaires (101), par exemple une glissière supérieure (301a) et une glissière inférieure (301b).

13. Système selon l'une quelconque des revendications précédentes, **caractérisé en ce que** les profils aérodynamiques de service (200) sont fixés aux attaches primaires par des dispositifs de fixation (400) qui sont séparés des glissières (300).

14. Système selon l'une quelconque des revendications précédentes, **caractérisé en ce que** les dispositifs de fixation (400) et/ou les glissières (300) ont une source d'énergie localisée avec laquelle effectuer les fonctions nécessaires, par exemple la propulsion, le contrôle des profils aérodynamiques, le contrôle interne, les communications, la collecte de données, le calcul et l'éclairage, entre autres choses.

15. Système selon la revendication précédente, **caractérisé en ce que** des sources d'énergie localisées peuvent être réapprovisionnées, ravitaillées en carburant, rechargées, réactivées ou remplacées, selon le cas, en utilisant d'autres dispositifs tels que des glissières ou des navettes qui peuvent se déplacer le long d'attaches primaires (101), et qui peuvent avoir leurs propres sources d'énergie localisées.
